# EUROPÄISCHE PATENTSCHRIFT

(11) **EP 0 962 510 B1**
(45) Veröffentlichungstag und Bekanntmachung des Hinweises auf die Patenterteilung: **16.08.2006**
(21) Anmeldenummer: 99110685.7
(22) Anmeldetag: 02.06.1999
(51) Int. Cl.: C09J 201/00, C09J 193/04, C08L 101/00

(54) **Fussbodenklebstoffe**
Floor adhesives
Revêtements de sol

(30) Priorität: 04.06.1998 DE 19824928
(43) Veröffentlichungstag der Anmeldung: 08.12.1999
(73) Patentinhaber: BASF Aktiengesellschaft, 67056 Ludwigshafen (DE)
(72) Erfinder: Fickeisen, Peter, 67246 Dirmstein (DE); Wistuba, Eckehardt Dr., 67098 Bad Dürkheim (DE)

(56) Entgegenhaltungen:
- DE-A- 3 028 693
- US-A- 3 926 880
- US-A- 4 590 230
- PATENT ABSTRACTS OF JAPAN vol. 1997, no. 04, 30. April 1997 (1997-04-30) & JP 08 337765 A (KONISHI KK), 24. Dezember 1996 (1996-12-24)
- PATENT ABSTRACTS OF JAPAN vol. 008, no. 156 (C-234), 19. Juli 1984 (1984-07-19) & JP 59 058069 A (HEKISUTO GOUSEI KK), 3. April 1984 (1984-04-03)

## Beschreibung

Die vorliegende Erfindung betrifft die Verwendung einer wäßrigen Zusammensetzung, enthaltend

| | |
|---|---|
| 10 bis 35 Gew.-% | eines in Wasser dispergierten Polymeren A) mit einer Glasübergangstemperatur Tg unter -10°C |
| | |
| 5 bis 22 Gew.-% | eines bei 23°C und 1 bar flüssigen Harzes B) mit einer Glasübergangstemperatur unter -10°C, in dem Abietinsäure bei 23°C und 1 bar derart löslich ist, daß Lösungen aus Harz B und Abietinsäure mit einem Gewichtsanteil von bis zu 50 Gew.-% Abietinsäure erhältlich sind |
| | |
| 5 bis 22 Gew.-% | eines Harzes C) auf Basis von Abietinsäure oder modifizierter Abietinsäure mit einer Glasübergangstemperatur von 0 bis 90°C und |
| | |
| 21 bis 80 Gew.-% | eines Füllstoffs D), |

wobei sich die Gewichtsprozente auf die Summe der Bestandteile der wäßrigen Zusammensetzung mit Ausnahme von Wasser beziehen, als Fußbodenkleber für Teppichböden oder Bodenbeläge aus PVC (in Ausführungen als Mehrschichtbeläge oder Homogenbeläge), Schaumstoffbeläge mit Textilunterseite (z.B. Jute), Polyestervlies, Gummibeläge, Textilbeläge, z.B. auch mit unterschiedlicher Rükkenausstattung (wie Polyurethanschaum, Styrol-Butadien-Schaum, textiler Zweitrücken), Nadelfilzbodenbeläge, Polyolefinbeläge oder Linoleumbeläge.

Generell sollen Klebstoffe eine gute Adhäsion, d.h. eine gute Haftung zum Substrat und eine gute Kohäsion, d.h. einen guten Zusammenhalt in der Klebstoffschicht, aufweisen. An Klebstoffe für Fußbodenbeläge werden besondere Anforderungen gestellt. Hier ist vor allem ein gutes Naßanzugsvermögen gewünscht. Ein gutes Naßanzugsvermögen bedeutet, daß nach Verlegen z.B. eines Teppichbodens auf den mit der wäßrigen Dispersion beschichteten Untergrund der Teppichboden zunächst noch ausgerichtet und die Lage korrigiert werden kann, dann aber bald eine rutschfeste Verklebung gegeben ist, deren Festigkeit mit fortlaufender Trocknung zunimmt.

Ein gutes Trockenanfaßvermögen bedeutet, daß auch nach längerer Ablüftzeit ein Teppichboden nach Verlegen auf den dann trockenen Untergrund einen festen, rutschfesten Verbund ergibt.

Darüberhinaus ist ein Verzicht auf flüchtige organische Bestandteile, z.B. Lösemittel oder Weichmacher erwünscht, um spätere Belastungen durch entsprechende Emissionen zu vermeiden.

Fußbodenkleber sind bereits aus EP-A-490191 und WO 95/21884 und der Deutschen Patentanmeldung P 19 801 892.4 (OZ 48 723) bekannt.

Aus US 4590230 sind Klebstoffe für keramische Fliesen bekannt. Die Klebstoffe enthalten eine Acrylatdispersion, ein Kolophoniumharz, Füllstoffe und ein weiteres Harz.

Grundsätzlich sind daher Klebstoffe erwünscht, die weder bei der Verarbeitung noch bei der späteren Verwendung Substanzen emittieren, die die Raumluft belasten und sich gleichzeitig anwendungstechnisch durch eine gute Klebrigkeit, z.B. ein gutes Naßanzugsvermögen und Trockenanfaßvermögen sowie eine gute Wärmestandfähigkeit der Verklebung auszeichnen.

Aufgabe der vorliegenden Erfindung waren daher Klebstoffe, insbesondere Fußbodenkleber, mit den voranstehend genannten Eigenschaften.

Demgemäß wurden die eingangs definierte Verwendung gefunden.

Die wäßrige Zusammensetzung enthält vorzugsweise
15 bis 30 Gew.-%, besonders bevorzugt 18 bis 28 Gew.- des Polymeren A)
7 bis 19 Gew.-%, besonders bevorzugt 9 bis 16 Gew.-% des Harzes B)
7 bis 19 Gew.-%, besonders bevorzugt 9 bis 16 Gew.-% des Harzes C) und
32 bis 71 Gew.-%, besonders bevorzugt 40 - 64 Gew.-% Füllstoff D).

Die Gewichtsprozente beziehen sich dabei auf die Summe der Komponenten der wäßrigen Zusammensetzung mit Ausnahme von Wasser, d.h. im wesentlichen den Festgehalt der Zubereitung. Der Feststoffgehalt der erfindungsgemäßen Zusammensetzung beträgt bevorzugt 65 - 92 %, insbesondere 76 - 84 Gew.-%.

Bei dem Polymeren A) handelt es sich vorzugsweise um ein radikalisch polymerisiertes Polymer aus ethylenisch ungesättigten Monomeren.

Das Polymer enthält vorzugsweise sog. Hauptmonomere, ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, nicht aromatischen Kohlenwasserstoffen mit mindestens 2 konjugierten Doppelbindungen oder Mischungen dieser Monomeren.

Die vorstehend genannten Monomeren bzw. Mischungen dieser Monomeren sind vorzugsweise zu 60 bis 100 Gew.-%, vorzugsweise 80 bis 100 Gew.-%, besonders bevorzugt 90 bis 99,8 Gew.-%, bezogen auf das Polymer, im Polymer enthalten.

Im einzelnen zu nennen sind z.B. (Meth)acrylsäurealkylester mit einem C₁-C₁₂-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und mindestens zwei olefinischen Doppelbindungen seien Butadien, Isopren, und Chloropren genannt.

Besonders bevorzugt sind (Meth)acrylsäureester und deren Mischungen.

Weitere Monomere, die z.B. von 0 bis 40 Gew.-%, vorzugsweise von 0 bis 20 Gew.-% und besonders bevorzugt von 0,2 bis 10 Gew.-% im Polymer enthalten sein können, sind insbesondere C₁-C₁₀-Hydroxyalkyl(meth)acrylate, (Meth)acrylamid sowie dessen am Stickstoff mit C₁-C₄-Alkyl substituierten Derivate, ethylenisch ungesättigte Carbonsäuren, Dicarbonsäuren, deren Halbester und Anhydride, z.B. (Meth)acrylsäure, Maleinsäure, Fumarsäure, Maleinsäureanhydrid, Maleinsäure- und Fumarsäurehalbester und Itaconsäure. Ganz besonders bevorzugt ist ein Gehalt von 0,2 bis 5 Gew.-% einer ethylenisch ungesättigten Carbonsäure.

Die Glasübergangstemperatur des Polymeren liegt vorzugsweise zwisehen -50 und -10°C, insbesondere zwischen -40°C und -15°C und ganz besonders bevorzugt zwischen -15 und -30°C.

Die Glasübergangstemperatur des Polymeren läßt sich nach üblichen Methoden wie Differentialthermoanalyse oder Differential Scanning Calorimetrie (s. z.B. ASTM 3418/82, sog. "midpoint temperature") bestimmen.

Der Gelgehalt des Polymeren A) liegt vorzugsweise unter 40 Gew.-%, vorzugsweise unter 30 Gew.-%, besonders bevorzugt unter 20 Gew.-% bezogen auf das Polymer A). Der Gelgehalt sollte vorzugsweise über 5 Gew.-% liegen.

Der Gelgehalt ist der Gehalt an unlöslichen Bestandteilen.

Der Gelgehalt wird durch die nachfolgende Methode bestimmt und definiert: Die Dispersion wird bei 21°C zu einem Film der Dicke von ca. 1 mm getrocknet. Ein Gramm des Polymerfilms wird in 100 m1 Tetrahydrofuran gegeben und eine Woche bei 21°C stehen gelassen. Danach wird die erhaltene Lösung bzw. Mischung mit Hilfe eines Gewebefilters (Maschenweite 125 µm) filtriert. Der Rückstand (gequollener Film) wird bei 21°C 2 Tage im Vakuumtrockenschrank getrocknet und anschließend gewogen. Der Gelgehalt ist die Masse des gewogenen Rückstands dividiert durch die Masse des eingesetzten Polymerfilms.

Die in Tetrahydrofuran löslichen Anteile des Polymeren betragen entsprechend vorzugsweise 60 bis 100 Gew.-%, vorzugsweise 70 bis 100 Gew.-%, besonders bevorzugt 80 bis 100 Gew.-%, insbesondere bis 95 Gew.-%, bezogen auf das Polymer.

Das zahlenmittlere Molekulargewicht Mₙ dieser löslichen Anteile ist vorzugsweise kleiner 30.000, insbesondere kleiner als 20.000, bevorzugt kleiner als 15.000 und das gewichtsmittlere Molekulargewicht M_{w} ist vorzugsweise größer 250.000 (bestimmt durch Gelpermeationschromatographie mit Polystyrol als Standard an einer Polymerlösung in Tetrahydrofuran nach Sedimetation der unlöslichen Bestandteile).

Mₙ liegt im allgemeinen jedoch nicht unter 5000 g/mol und M_{w} liegt im allgemeinen nicht über 800.000 g/mol.

Die Herstellung des Polymeren erfolgt durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Copolymerisat durch Lösungspolymerisation mit anschließender Dispergierung in Wasser oder besonders bevorzugt durch Emulsionspolymerisation hergestellt, so daß wäßrige Copolymerdispersionen entstehen.

Die Emulsionspolymerisation kann diskontinuierlich, mit oder ohne Verwendung von Saatlatices, unter Vorlage aller oder einzelner Bestandteile des Reaktionsgemisches, oder bevorzugt unter teilweiser Vorlage und Nachdosierung der oder einzelner Bestandteile des Reaktionsgemisches, oder nach dem Dosierverfahren ohne Vorlage durchgeführt werden.

Die Monomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren wie H₂O₂/Ascorbinsäure.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wäßrigen Sekundärdispersionen ist dem Fachmann bekannt und z.B. in der DE-A-37 20 860 beschrieben.

Zur Einstellung des Molekulargewichts können bei der Polymerisation Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan.

Der Feststoffgehalt der erhaltenen Polymerdispersionen beträgt vorzugsweise 40 bis 80, besonders bevorzugt 45 bis 75 Gew.-%. Hohe Polymerfeststoffgehalte können z.B. nach Verfahren, welche in der deutschen Patentanmeldung P 4 307 683.1 oder der EP 37 923 beschrieben sind, eingestellt werden.

Die Zusammensetzung enthält weiterhin ein flüssiges Harz B) mit einer Glasübergangstemperatur Tg unter -10°C, bevorzugt unter - 15°C. Das Harz B) ist ein Lösemittel für Abietinsäure. Die Löslichkeit von Abietinsäure in Harz B) bei 23°C und 1 bar ist so groß, daß Lösungen aus Harz B) und Abietinsäure mit einem Gewichtsanteil von bis zu 50 Gew.-%, bevorzugt bis zu 90 Gew.-% Abietinsäure (und entsprechend einem Gewichtsanteil von 50 Gew.-%, bevorzugt 10 Gew.% Harz B), jeweils bezogen auf die Lösung, hergestellt werden können.

Geeignete Harze B) haben vorzugsweise ein mittleres zahlenmittleres Molekulargewicht Mₙ von 300 bis 3000, besonders bevorzugt von 450 bis 2800. Das Molekulargewicht Mₙ wird wie oben bereits beschrieben bestimmt.

Geeignete Harze B) sind z.B. Kohlenwasserstoffharze, d.h. Harze, die ausschließlich aus Kohlenstoff und Wasserstoff bestehen, oder modifizierte Kohlenwasserstoffharze, welche bis zu 10 Gew.-%, bezogen auf das Harz, Hydroxylgruppen enthalten können.

Genannt seien Harze aus ungesättigten, aromatischen Kohlenwasserstoffen, insbesondere C₉ oder C₁₀ Kohlenwasserstoffen, wie Cumaron, Inden, α-Methylstyrol. Diese Harze können OH-Gruppen z.B. durch Copolymerisation oder polymeranaloge Umsetzungen, z.B. Additionen mit Phenol, Kresol, Hydrochinon enthalten. Geeignete Harze haben z.B. Viskositäten von 200 bis 450 mPas (23°C, DIN 53019). Im Markt erhältlich ist z.B. Novares® XK 039 der Firma VFT.

Weitere geeignete Harze B) sind Alkydharze oder ungesättigte, bzw. gesättigte Öle, sowie deren Derivate, z.B. epoxidierte Öle oder geöffnete Epoxide oder mit gesättigten oder ungesättigten Ölen modifizierte Alkydharze. Auch Polyether, insbesondere Polyvinylether, kommen in Betracht. Geeignete Harze B) sind auch Harze auf Basis von Abietinsäurederivaten, insbesondere veresterte Abietinsäure (Handelsnamen: Dertaline® 25 oder Burez LE 3004), soweit sie die obigen Bedingungen erfüllen.

Es können naturgemäß auch Kombinationen von verschiedenen Harzen B) eingesetzt werden.

Harze C) sind Harze auf Basis von Abietinsäure oder modifizierter Abietinsäure, z.B. hydrierte oder disproportionierte Abietinsäure, mit einer Glasübergangstemperatur von 0 bis 90°C, vorzugsweise 40 bis 85°C. Harze C) sind klebrigmachende Harze (Tackifier) wie sie üblicherweise in der Klebstoffindustrie Verwendung finden.

Geeignete Harze C) sind insbesondere als Kolophoniumharze bekannt.

Die wäßrige Zusammensetzung enthält noch mindestens den Füllstoff D). Als solche in Betracht kommen z.B. feingemahlene oder gefällte Kreiden mit einem mittleren Teilchendurchmesser von im allgemeinen zwischen 2 und 50 µm und/oder Quarzmehl mit einem üblichen mittleren Teilchendurchmesser von 3 bis 50 µm.

Die Zusammensetzung kann weiterhin Netz- oder Dispergiermittel z.B. für die Füllstoffe, Verdicker und auch z.B. noch weitere übliche Zuschlagstoffe, wie Entschäumer und Konservierungsstoffe enthalten.

Netz- oder Dispergiermittel können z.B. in Mengen von 0 bis 5 Gew.-%, Verdicker in Mengen von 0 bis 10 Gew.-%, Konservierungsmittel in Mengen von 0 bis 1 Gew.-% und Entschäumer in Mengen von 0 bis 5 Gew.-% in der wäßrigen Zusammensetzung enthalten sein. Die Gewichtsangaben beziehen sich dabei auf die Summe aller Bestandteile der wäßrigen Zusammensetzung, mit Ausnahme von Wasser.

Die Zusammensetzung ist vorzugsweise im wesentlichen frei, vorzugsweise frei von organischen Lösungsmitteln und Weichmachern wie z.B. Butylacetat, Toluol oder Phthalsäureester. Sie enthält daher organische Verbindungen mit einem Siedepunkt unterhalb 300°C bei Normaldruck (1 bar) in Mengen unter vorzugsweise 0,5 Gew.-% besonders bevorzugt unter 0,1 Gew.-%, ganz besonders bevorzugt unter 0,05 Gew.% und insbesondere unter 0,01 Gew.-%. Besonders bevorzugt erfüllt die erfindungsgemäße Zusammensetzung bzw. der erfindungsgemäße Fußbodenklebstoff Anforderungen der Emissionsfreiheit, wie sie von der Gemeinschaft Emissionskontrollierter Verlegewerkstoffe definiert werden.

Die Emissionen werden mit einer Kammerprüfmethode bestimmt. Der Fußbodenklebstoff bzw. die erfindungsgemäße Zusammensetzung wird mit 300 g/m² auf eine Glasplatte aufgetragen, deren Größe sich nach dem Kammervolumen richtet. Die Beladung der Kammer beträgt 0,4 m² der beschichteten Glasplatte pro m³ Kammervolumen. Die Emissionsbedingungen in der Edelstahlprüfkammer (Volumen mindestens 125 Liter) sind 23°C, 50 % rel. Luftfeuchte und ein stündlicher Luftwechsel der einen Austausch der gesamten Luft alle 2 Stunden bewirkt. Nach 10 Tagen werden die Langzeitemissionen bestimmt. Dazu wird ein definiertes Volumen des Luftstroms über Adsorbentien geleitet. Nach Desorption werden die emittierten Stoffe gaschromatographisch (GC-MS-Kopplung) oder flüssigkeitschromatographisch bestimmt. Die Langzeitemissionen werden in µg/m³ bestimmt, wobei Toluol als Standardsubstanz eingesetzt wird. Emittierte Substanzen, deren Kammerkonzentration größer als 20 µg/m³ ist, werden identifiziert und mit der identifizierten Reinsubstanz und kalibriert. Emittierte Substanzen, deren Kammerkonzentration kleiner als 20 µg/m³ ist, werden nicht einzeln identifiziert. Die Kalibrierung erfolgt in diesen Fällen mit Toluol.

Die Werte aller Substanzen werden addiert.

Im Falle der Zusammensetzung beträgt der Emissionswert für die Summe aller organischen Verbindungen maximal vorzugsweise 1500 µg/m³, und insbesondere maximal 500 µg/m³.

Die Herstellung der wäßrigen Zusammensetzung kann in einfacher Weise z.B. dadurch erfolgen, daß der bei der Emulsionspolymerisation erhaltenen wäßrigen Polymerdispersion des Polymeren A) die Harze B) und C) und die Füllstoffe und gegebenenfalls weitere Additive unter Rühren zugesetzt werden.

Bevorzugt werden jedoch die Harze B) und C) nicht getrennt zugesetzt, sondern es wird aus den Harzen B) und C) eine Lösung hergestellt und diese dann der Polymerdispersion zugesetzt.

Die Herstellung der Lösung erfolgt vorzugsweise durch Mischen der Harze B) und C) bei erhöhten Temperaturen. Geeignet sind z.B. Temperaturen bis zu 180°C, vorzugsweise von 60 bis 120°C. Gegebenenfalls können auch Dispergierhilfsmittel, wie Emulgatoren oder Schutzkolloide mitverwendet werden.

Der Wassergehalt der fertigen wäßrigen Zusammensetzung (inklusive Wasser) liegt im allgemeinen bei 7 bis 50, insbesondere 10 bis 30 Gew.-%, bezogen auf die gesamte wäßrige Zusammensetzung.

Die wäßrige Zusammensetzung eignet sich als Fußbodenkleber für Teppichböden oder sonstige Bodenbeläge z.B. aus PVC (in Ausführungen als Mehrschichtbeläge oder Homogenbeläge), Schaumstoffbeläge mit Textilunterseite (z.B. Jute), Polyestervlies, Gummibeläge, Textilbeläge, z.B. auch mit unterschiedlicher Rückenausstattung (wie Polyurethanschaum, Styrol-Butadien-Schaum, textiler Zweitrücken), Nadelfilzbodenbeläge, Polyolefinbeläge oder Linoleumbeläge, auf Untergründen wie Holz, Estrich, Beton, keramische Fliesen, Metalluntergründe oder ähnliches.

Der Kleber kann z.B. mit einer Zahnleiste auf den Untergrund aufgetragen werden. Nach dem üblichen Ablüften wird der Bodenbelag eingelegt. Die erfindungsgemäße Klebstoffzusammensetzung weist ein gutes Niveau von anwendungstechnischen Eigenschaften wie Schälfestigkeit, Scherfestigkeit, Naßanzugsvermögen, Trockenanfaßvermögen und Wärmestandfestigkeit auf.

### Beispiele

### I. Wäßrige Zusammensetzung

### Beispiel 1:

Nafolgende Bestandteile wurden gemischt. Vorab wurde die Lösung von Harz C) (Kolophoniumharz) in Harz B) (Kohlenwasserstoffharz: Novares XK 039) hergestellt.

| | Gew.-Teile |
|---|---|
| Polyacrylatdispersionen 62 %ig (Acronal DS 3518) | 27,5 |
| Harzmischung aus 50 Teilen Balsamharz und 50 Tei len Novares XK 039 und 5 Teilen C₁₂-Alkylethoxi lat (10 EO-Einheiten) | 16,0 |
| C₁₂-Alkylethoxilat (20 EO)-Sulfat | 0,5 |
| 3 %ige Latekoll D-Lösung (Acrylatverdik ker) PH 8,5 | 10,8 |
| Entschäumer auf Silikonbasis | 0,2 |
| C₁₂-Alkylethoxilat (5 EO) | 0,5 |
| Pigmentverteiler NL | 0,5 |
| Na-Gluconat | 1,5 |
| Lumiten® I-RA, Netzmittel | 0,2 |
| Ulmer Weiß XM, Füllstoff | 42,3 |
| | 100,0 |

Feststoffgehalt: 77 %
Anwendungstechn. Ergebnisse siehe Tabelle 1

### Vergleichsbeispiel

| | Gew.-Teile |
|---|---|
| Polyacrylatdispersionen 62 %ig (Acronal® DS 3518) | 27,5 |
| C₁₂-Alkylethoxilat (10 EO) | 0,5 |
| 2 %ige Latekoll D-Lösung PH 8,5 | 11,3 |
| Entschäumer auf Silikonbasis | 0,2 |
| C₁₂-Alkylethoxilat (5 EO) | 0,5 |
| Pigmentverteiler NL | 0,5 |
| Calgon N 30 %ig | 1,0 |
| Na-Gluconat | 1,5 |
| Lumiten® I-RA, Netzmittel | 0,2 |
| Ulmer Weiß XM, Füllstoff | 45,8 |
| | 100,0 |

Feststoffgehalt: 77 %
Anwendungstechn. Ergebnisse siehe Tabelle 1

### II Anwendungstechnische Prüfung

- Naßanzugsvermögen
   Der Klebstoff wird mit einem DIN-Rakel auf eine Zementfaserplatte (z.B. Eternit® 2000) (20 x 50 cm) in Abzugsrichtung ausgetragen. Auftagsmenge ca. 350 - 400 g/m². Nadelfilzbeläge (NBB Streifen) werden nach 10 Minuten Ablüften in das Kleberbett eingelegt und mit einer 2,5 kg Walze durch 3 mal Hin- und Herrollen angepreßt. In den angegebenen Zeitabständen werden die Beläge mit eimem Abzugsgerät abgezogen und dabei die Zunahme des Abschälwiderstandes in N 5 cm bestimmt.
- Trockenanfaßvermögen
   Der Klebstoff wird mit DIN-Rakel auf eine Zementfaserplatte (z.B. Eternit® 2000) (20 x 50) in Abzugsrichtung aufgetragen. Auftragsmenge ca. 250 - 300 g/m². PVC Streifen (Pegulan® B 1) werden nach unterschiedlicher Ablüftzeit in das Kleberbett eingelegt und mit einer 2,5 kg Walze durch Hin- und Herrollen (3x) angepreßt. Anschließend werden die Streifen mit einem Abzugsgerät abgezogen und der Abschälwiderstand in N 5 cm bestimmt.

**Tabelle: Prüfungsergebnisse**

| | Naßanzugsvermögen (N/5 cm) nach | | | |
|---|---|---|---|---|
| | 10 min | 15 min | 20 min | 30 min |
| Beispiel 1 | 9 | 15 | 28 | 45 |
| Vergleich | 6 | 11 | 17 | 33 |

| | Trockenanfaßvermögen (N/5 cm) nach | | |
|---|---|---|---|
| | 10 min | 20 min | 30 min |
| Beispiel 1 | 2 | 30 | 27 |
| Vergleich | 0 | 8 | 9 |

## Patentansprüche

1. Verwendung einer wäßrigen Zusammensetzung, enthaltend
| | |
|---|---|
| 10 bis 35 Gew.-% | eines in Wasser dispergierten Polymeren A) mit einer Glasübergangstemperatur Tg unter -10°C |
| | |
| 5 bis 22 Gew.-% | eines bei 23°C und 1 bar flüssigen Harzes B) mit einer Glasübergangstemperatur unter -10°C, in dem Abietinsäure bei 23°C und 1 bar derart löslich ist, daß Lösungen aus Harz B und Abietinsäure mit einem Gewichtsanteil von bis zu 50 Gew.-% Abietinsäure erhältlich sind |
| | |
| 5 bis 22 Gew.-% | eines Harzes C) auf Basis von Abietinsäure oder modifizierter Abietinsäure mit einer Glasübergangstemperatur von 0 bis 90°C und |
| | |
| 21 bis 80 Gew.-% | eines Füllstoffs D), |
wobei sich die Gewichtsprozente auf die Summe der Bestandteile der wäßrigen Zusammensetzung mit Ausnahme von Wasser beziehen, als Fußbodenkleber für Teppichböden oder Bodenbeläge aus PVC wie z.B. in Ausführungen als Mehrschichtbeläge oder Homogenbeläge, Schaumstoffbeläge mit Textilunterseite wie z.B. Jute, Polyestervlies, Gummibeläge, Textilbeläge, z.B. auch mit unterschiedlicher Rückenausstattung wie z.B. Polyurethanschaum, Styrol-Butadien-Schaum, textiler Zweitrücken, Nadelfilzbodenbeläge, Polyolefinbeläge oder Linoleumbeläge.

2. Verwendung gemäß Anspruch 1, wobei der Gelgehalt des Polymeren A) kleiner 40 Gew.-% und das zahlenmittlere Molgewicht Mn der löslichen Anteile des Polymeren kleiner 30.000 ist.

3. Verwendung gemäß Anspruch 1 oder 2, wobei das Polymere A) in Form einer 40 bis 75 gew.-%igen wäßrigen Dispersion vorliegt.

4. Verwendung gemäß einem der Ansprüche 1 bis 3, wobei der Gehalt an flüchtigen organischen Bestandteilen, das heißt organischen Verbindungen mit einem Siedepunkt bei 1 bar unter 300°C, kleiner als 0,5 Gew.-%, bezogen auf die wäßrige Zusammensetzung ist.

5. Verwendung gemäß einem der Ansprüche 1 bis 4, wobei das Polymere A) zu 60 bis 100 Gew.-% aus sogenannten Hauptmonomeren, ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, nicht aromatischen Kohlenwasserstoffen mit mindestens 2 konjugierten Doppelbindungen oder Mischungen dieser Monomeren besteht.

6. Verwendung einer wäßrigen Zusammensetzung gemäß einem der Ansprüche 1 bis 5, **dadurch gekennzeichnet, daß** zunächst eine Lösung aus den Harzen B) und C) hergestellt und diese Lösung und die anderen Bestandteile der Zusammensetzung dann der wäßrigen Dispersion des Polymeren A) zugesetzt werden.

## Claims

1. The use of an aqueous composition comprising
| | |
|---|---|
| from 10 to 35% by weight | of a water-dispersed polymer A) having a glass transition temperature Tg of below -10°C |
| | |
| from 5 to 22% by weight | of a resin B) which is liquid at 23°C and 1 bar, has a glass transition temperature of below -10°C and in which abietic acid is soluble at 23°C and 1 bar such that it is possible to obtain solutions of resin B and abietic acid having a weight content of up to 50% by weight of abietic acid |
| | |
| from 5 to 22% by weight | of a resin C) which is based on abietic acid or on modified abietic acid and has a glass transition temperature of from 0 to 90°C and |
| | |
| from 21 to 80% by weight | of a filler D), |
the percentages by weight being based on the sum of the constituents of the aqueous composition with the exception of water, as a flooring adhesive for carpets or floor coverings made from PVC, such as, for example, in configurations as multilayer coverings or homogeneous coverings, foam coverings with a textile backing, such as, for example, jute, polyester nonwoven, rubber coverings, textile coverings with, for example, various backings, such as, for example, polyurethane foam, styrene-butadiene foam, or a textile secondary backing, needlefelt floor coverings, polyolefin coverings or linoleum coverings.

2. The use according to claim 1, wherein the gel content of polymer A) is less than 40% by weight and the number-average molecular weight Mn of the soluble fractions of the polymer is less than 30,000.

3. The use according to claim 1 or 2, wherein the polymer A) is in the form of an aqueous dispersion with a solids content of from 40 to 75% by weight.

4. The use according to any of any of claims 1 to 3, wherein the content of volatile organic constituents - that is, organic compounds having a boiling point at 1 bar of less than 300°C - is less than 0.5% by weight, based on the aqueous composition.

5. The use according to any of any of claims 1 to 4, wherein the polymer A) consists to the extent of from 60 to 100% by weight of principal monomers selected from C₁-C₂₀-alkyl (meth)acrylates, vinyl esters of carboxylic acids comprising up to 20 carbons, vinylaromatic compounds having up to 20 carbons, ethylenically unsaturated nitriles, vinyl halides, nonaromatic hydrocarbons having at least 2 conjugated double bonds, and mixtures of these monomers.

6. The use of an aqueous composition according to any of any of claims 1 to 5, which comprises first preparing a solution of the resins B) and C) and then adding this solution and the other constituents of the composition to the aqueous dispersion of the polymer A).

## Revendications

1. Utilisation d'une composition aqueuse contenant
| | |
|---|---|
| 10 à 35 % en poids | d'un polymère A) dispersé dans l'eau et présentant une température de transition vitreuse Tg inférieure à -10°C, |
| | |
| 5 à 22 % en poids | d'une résine B) liquide à 23°C et 1 bar et présentant une température de transition vitreuse inférieure à -10°C, dans laquelle de l'acide abiétique est soluble à 23°C et 1 bar de telle façon que des solutions à base de résine B) et d'acide abiétique comportant une fraction pondérale de jusqu'à 50 % en poids d'acide abiétique puissent être obtenues, |
| | |
| 5 à 22 % en poids | d'une résine C) à base d'acide abiétique ou d'acide abiétique modifié présentant une température de transition vitreuse de 0 à 90°C, et |
| | |
| 21 à 80 % en poids | d'une matière de remplissage D), |
les pour-cent en poids se rapportant à la somme des composants de la composition aqueuse à l'exception de l'eau, comme adhésifs de sol pour des moquettes ou revêtements de sol en PVC, comme par exemple dans des réalisations sous la forme de revêtements multicouches ou de revêtements homogènes, comme revêtements en mousse avec dessous en textile, comme par exemple du jute, un non-tissé en polyester, des couches en caoutchouc, des revêtements textiles, par exemple aussi avec un équipement de dos différents, comme par exemple de la mousse de polyuréthanne, de la mousse de styrène-butadiène, des dos doubles textiles, des revêtements de sol en feutre aiguilleté, des revêtements de polyoléfine ou des revêtements de linoléum.

2. Utilisation suivant la revendication 1, dans laquelle la teneur en gel du polymère A) est inférieure à 40 % en poids et le poids moléculaire moyen numérique Mn des fractions solubles du polymère est inférieur à 30 000.

3. Utilisation suivant la revendication 1 ou 2, dans laquelle le polymère A) se présente sous la forme d'une dispersion aqueuse à 40 jusqu'à 75 % en poids.

4. Utilisation suivant l'une des revendications 1 à 3, dans laquelle la teneur en éléments organiques volatils, c'est-à-dire en composés organiques ayant un point d'ébullition inférieur à 300°C à 1 bar, est inférieure à 0,5 % en poids, par rapport à la composition aqueuse.

5. Utilisation suivant l'une des revendications 1 à 4, dans laquelle le polymère A) est constitué pour 60 à 100 % en poids de ce que l'on appelle des monomères principaux choisis parmi des (méth)-acrylates d'alkyle en C₁-C₂₀, des esters vinyliques d'acides carboxyliques contenant jusqu'à 20 atomes de C, des substances vinyl-aromatiques comportant jusqu'à 20 atomes de C, des nitriles éthyléniquement insaturés, des halogénures de vinyle, des hydrocarbures non aromatiques comportant au moins deux doubles liaisons conjuguées ou des mélanges de ces monomères.

6. Utilisation d'une composition aqueuse suivant l'une des revendications 1 à 5, **caractérisée en ce qu'**on prépare tout d'abord une solution des résines B) et C) et cette solution et les autres composants de la composition sont alors ajoutés à la dispersion aqueuse du polymère A).
